# EUROPEAN PATENT SPECIFICATION

(11) **EP 1 375 040 B1**
(45) Date of publication and mention of the grant of the patent: **30.09.2009**
(21) Application number: 03445065.0
(22) Date of filing: 28.05.2003
(51) Int. Cl.: B23B 31/30

(54) **Gas spring**
Luftfeder
Ressort à gaz

(30) Priority: 17.06.2002 SE 0201827
(43) Date of publication of application: 02.01.2004
(73) Proprietor: Sandvik Intellectual Property AB, 811 81 Sandviken (SE)
(72) Inventor: Anderson, Ken, 81022 Arsunda (SE)

(56) References cited:
- WO-A-00/59666
- US-A- 4 986 704
- US-A- 5 979 911

## Description

### Technical Field of the Invention

The present invention relates to a gas spring included in a clamping device on a machine spindle, whereby said clamping device comprises a drawbar, clamping members arranged at one end of the drawbar in order to clamp a part of a tool coupling at said end, whereby the gas spring exerts an axially directed force on the drawbar in the direction away from the clamping members, and that the gas spring comprises a housing, a piston being axially displaceable in the housing, as well as a gas medium contained in the housing. The invention also relates separately to a machine spindle.

### Prior Art

A clamping device is previously known from SE-C-515 002, whereby this device comprises a gas spring where the space that receives the gas medium has a generally cylindrical shape. A lubricant is added to the gas medium in order to lubricate the seals included in the gas spring. If the gas spring is vertically oriented, the uppermost positioned seal will not obtain sufficient lubrication, since the gas medium/lubricant will not reach up to the uppermost positioned seal on rotation of the gas spring. On rotation of the gas spring, the gas medium/lubricant will be effected by the centrifugal force, which brings the gas medium/lubricant to "climb" on the internal cylindrical wall of the gas spring. However, this climbing does not proceed so far that the gas medium/lubricant reaches up to the uppermost seal.

### Aims and Features of the Invention

A primary aim of the present invention is to describe a clamping device of the type defined above, which in vertical working position of the machine spindle guarantees lubrication also of the seal/seals between a housing and a piston of the gas spring that are positioned in the area of the end of the piston that has the maximum diameter.

Another aim of the present invention is not to make the constructional design of the gas spring more complicated than that in prior art.

At least the primary aim of the present invention is realised by means of a gas spring and a machine spindle having been given the features defined in the appended, independent claims. Preferred embodiments of the invention are defined in the dependent claims.

### Brief Description of the Drawings

Below, two embodiments of the invention will be described, reference being made to the appended drawings, where:
- Fig 1: shows a longitudinal cross-section through a first embodiment of a gas spring according to the present invention;
- Fig 2: shows a diagram of how high the oil film rises in different designs of the housing of the gas spring as a function of the number of revolutions; and
- Fig 3: shows a longitudinal cross-section through a second embodiment of a gas spring according to the present invention.

### Detailed Description of Preferred Embodiments of the Invention

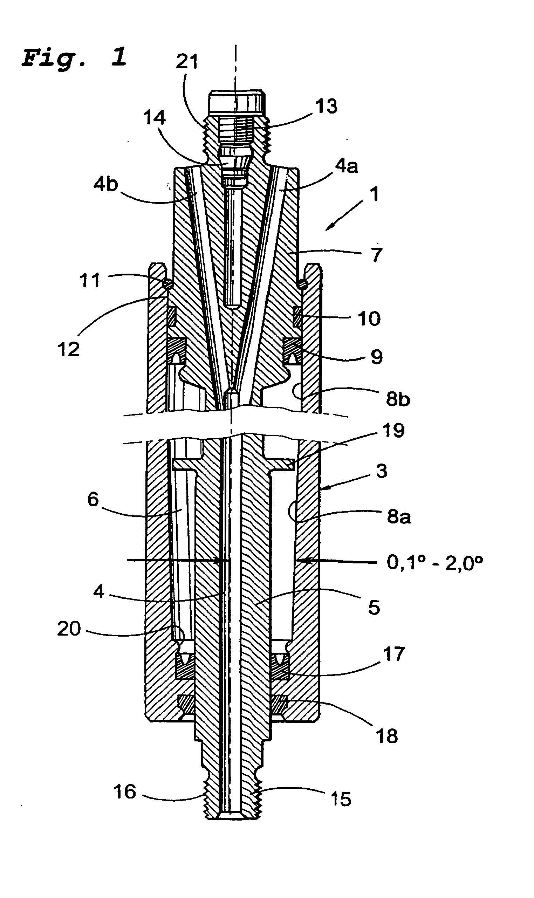

The gas spring 1 according to the present invention, illustrated in Fig 1, comprises a generally cylindrical housing 3, which is intended to be received in a casing of a machine spindle (not shown). It is general for the gas spring that it is not shown in the full length thereof, which is indicated in Fig 1 by broken lines. As for the other components included in a machine spindle, as well as the constructive integration of a gas spring in a machine spindle, reference is made to SE-C-515 002, whereby the contents of said document are hereby incorporated in the present description.

Inside the housing 3, a displaceable piston 5 is arranged, which at the upper end thereof in Fig 1 has a first cylindrical end portion 7, which is sealed against the internal limiting wall of the housing 3 via first and second seals 9 and 10, respectively, which extend along the circumference of said first cylindrical end portion 7. The seals 9 and 10 have the purpose of sealing the space between the first cylindrical end portion 7 and the internal limiting wall of the housing 3 against a gas medium 6 contained in the gas spring 1. The piston 5 has a first central, through cooling medium duct 4, which divides into two diverging part ducts 4a and 4b in the area of the first cylindrical end portion 7.

The first cylindrical end portion 7 extends out through the housing 3. Generally, the first cylindrical end portion 7 has a greater diameter than the rest of the piston 5. In order to prevent the piston 5 from being displaced too far out of the housing 3 in the direction upwards in Fig 1, an adjusting ring 11 is arranged in the housing 3, whereby a shoulder 12 running round the circumference of the first cylindrical end portion 7 comes to abutment against this adjusting ring 11. In the area of the free end thereof, the first cylindrical end portion 7 carries a screw 13 that seals a filling nipple 14 for the gas medium 6 contained in the housing 3. Generally, the first end portion 7 is intended to be connected to a push rod (not shown) via a first external thread 21 in the area of the free end of the first end portion 7. Said push rod is displaceably received inside the casing of the machine spindle, whereby reference in this connection is made to SE-C-515 002 for information of the constructive structure of the machine spindle.

The piston 5 has a second cylindrical end portion 15 extending out through the lower end in Fig 1 of the housing 3. Said second cylindrical end portion 15 has a second external thread 16 at the free end thereof, which is intended to be connected to a drawbar (not shown), which at the end thereof that is turned from the second end portion 15 is provided with clamping members for engagement with a tool coupling.

The housing 3 is provided with third and fourth seals 17 and 18, respectively, at the lower end thereof in Fig 1, which extend round the circumference of the piston 5 and have the purpose of sealing the space between the piston 5 and the internal limiting wall of the housing 3 against a gas medium 6 contained in the gas spring 1.

A radially protruding, circumferential flange 19 is arranged on an intermediate portion of the piston 5, whereby said flange 19 constitutes a stop shoulder when the piston 5 is displaced downwards in Fig 1. Said flange 19 thereby comes to abutment with an internal stop 20 of the housing 3, whereby the stop 20 consists of a part protruding towards the piston 5, which part extends along the internal circumference of the housing 3 adjacent to the third and fourth seals 17 and 18.

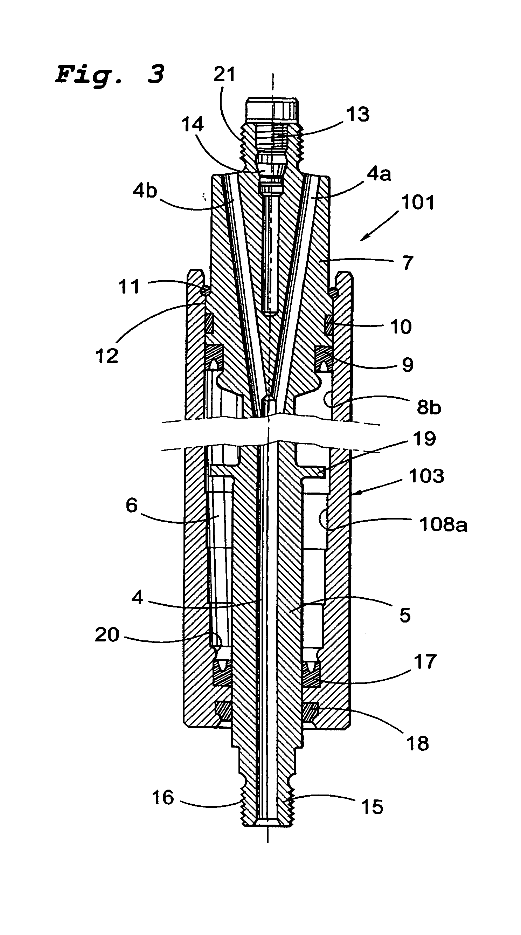

Normally, the pressure of the gas medium 6 contained in the gas spring 1 is approx. 150 bar. According to a presently preferred procedure, the machine spindles 1 with the appurtenant gas springs 1 are delivered in an "unloaded" state, i.e. without the pressurized gas medium 6. The reason for this is that gas springs 1 of the kind in question cannot be transported by aviation if they contain gas medium that has a pressure in the range of 150 bar, according to the current regulations. Gas springs 1 are normally "loaded" before they are delivered to the customer, whereby said gas springs 1 for this reason are provided with a filling nipple 14, see Fig 1 or 3, or the like. Said nipple 14 may naturally also be used in case the pressure of the gas medium 6 needs to be maintained or checked.

The characteristic feature of the gas spring 1 according to the present invention is that the internal space in the housing 3, i.e. the space that contains a gas medium 6, is defined by a limiting wall, which in a lower portion 8a in Fig 1 widens conically in the direction from the lower end of the housing 3 in Fig 1. Alternatively, this may be expressed as the lower portion of the limiting wall 8a widening conically in the direction of the end portion 7 of the piston 5 that has the larger cross-section. The widening takes place continuously. As is seen in Fig 1, half of the cone angle should be within the interval 0,1°- 2,0°. In an upper portion 8b, the limiting wall is cylindrical, which is necessary in order for the first and second seals 9 and 10 to function in a satisfying way.

Due to the fact that the lower portion 8a is generally conical, the lubricant mixed into the gas medium will more easily ascend along the limiting walls 8a and 8b inside the housing 3, which ensures that the lubricant also lubricates the first and second seals 9 and 10, which are positioned at the top in the housing 3 in Fig 1.

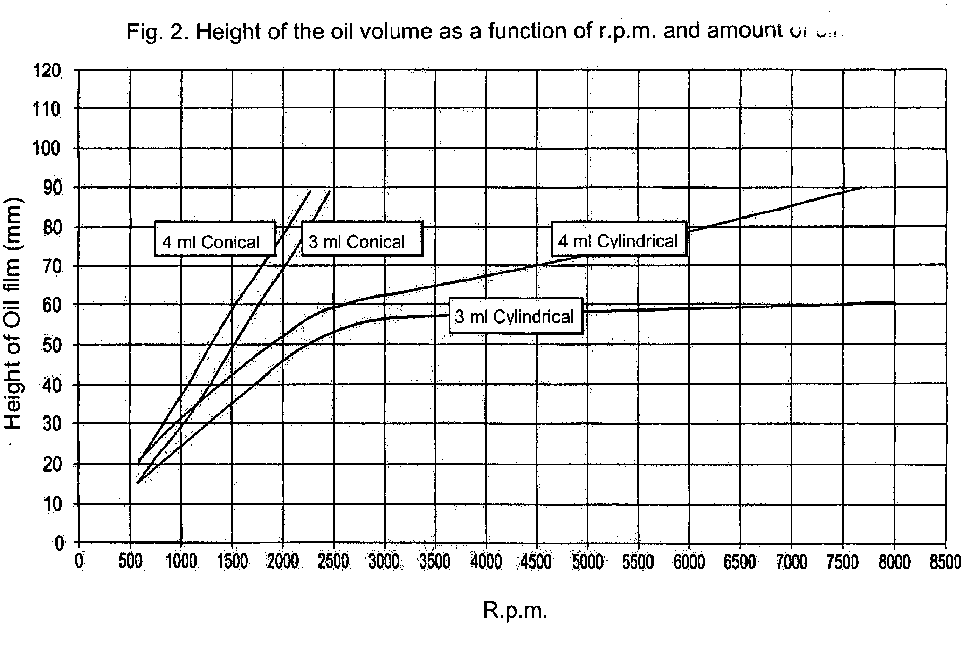

In order to confirm the significance of the fact that the inner limiting wall 8a, 8b of the housing 3 is at least partly conical and widens upwards in Fig 1, reference is made to the diagram in Fig 2, where empirical, comparative experiments with a gas spring according to the present invention, as well as a gas spring according to prior art, are accounted for. In this diagram, the height in mm of the oil film on the interior of the housing 3 is given on the vertical axis, i.e. how high the oil film rises on the limiting wall 8a, 8b. On the horizontal axis, the number of revolutions for the gas spring, and thereby also for the machine spindle, is given. On studying of the diagram in Fig 2, it will be realized that in a comparison of an internally conical housing 3 and an internally cylindrical housing, the oil film rises considerably higher in a conical housing 3, see for instance the number of revolutions 2000 revolutions/min. It is about a difference in height of approx. 25 mm.

The significance of the quantity of lubricating oil that has been added is also illustrated in Fig 2. Generally, a lubricating oil quantity of 4 ml, by comparison with a lubricating oil quantity of 3 ml, gives an increase of the height of the oil film of fully 5 mm. However, in this connection, it should be pointed out that the adding of lubricating oil has to be kept at a relatively low level since the compressibility of the gas medium decreases on increased addition of lubricating oil.

In Fig 3, an alternative embodiment of a gas spring 101 according to the present invention is shown. The parts of the gas spring 101 that are in principle identical with the corresponding parts of the gas spring 1 have obtained the same reference designations.

The essential difference between the gas spring 101 and the gas spring 1 is the design of the housing 103 in comparison with the housing 3. The lower portion 108a of the internal limiting wall of the housing 103 widens in the direction upwards in Fig 3, whereby the lower portion 108a, however, widens in steps and not continuously, as is the case in the embodiment described in Fig 1. The upper portion 8b of the internal limiting wall is cylindrical correspondingly as in the embodiment according to Fig 1.

### Feasible Modifications of the Invention

In the embodiments described above, certain details have been given for the interaction of the gas spring 1; 101 with other components included in a machine spindle. However, these details may be formed in multiple ways, without therefore deviating from the principle of the present invention.

### List of Reference Designations

- 1: Gas spring
- 3: Cylindrical housing
- 5: Piston
- 7: First cylindrical end portion
- 9: First seal
- 10: Second seal
- 11: Adjusting ring
- 12: Shoulder
- 13: Screw
- 14: Filling nipple
- 15: Second cylindrical end portion
- 16: Second external thread
- 17: Third seal
- 18: Fourth seal
- 19: Flange
- 20: Internal stop
- 21: First external thread

## Claims

1. Gas spring (1; 101) included in a clamping device on a machine spindle, whereby said clamping device comprises a drawbar, clamping members arranged at one end of the drawbar in order to clamp a part of a tool coupling at said end, whereby the gas spring (1; 101) exerts an axially directed force on the drawbar in the direction away from the clamping members, and that the gas spring (1; 101) comprises a housing (3; 103), a piston (5), which has two end portions (7, 15), being axially displaceable in the housing (3; 103), as well as a gas medium (6) contained in the housing (3; 103), **characterized in that** the internal limiting surface of the housing (3; 103) comprises a portion (8a; 108a) that widens in the direction of the end portion (7) of the piston (5) that has a larger cross-section.

2. Gas spring (1) according to claim 1, **characterized in that** the portion (8a) widens conically.

3. Gas spring (101) according to claim 1, **characterized in that** the portion (108a) widens in steps.

4. Gas spring according to any one or some of the claims 1-3,**characterized in that** half of the cone angle is within the interval 0,1 ° - 2,0°.

5. Gas spring according to any one or some of the preceding claims, **characterized in that** the end portion (7) of the piston (5) having a larger cross-section has members for receipt of seals (9, 10).

6. Gas spring according to any one or some of the preceding claims, **characterized in that** the end of the housing (3) that is adjacent to the end portion of the piston (5) having a smaller cross-section has members for receipt of seals (17, 18).

7. Machine spindle comprising a casing, in which a clamping device is arranged, whereby the clamping device comprises a gas spring (1; 101) and a drawbar, clamping members arranged at one end of the drawbar in order to clamp a part to a tool coupling at said end, whereby the gas spring (1; 101) exerts an axially directed force on the drawbar in the direction away from the clamping members, and that the gas spring (1; 101) comprises a housing (3; 103), an axially displaceable piston (5) in the housing (3; 103), which piston has two end portions (7, 15), as well as a gas medium (6) contained in the housing (3; 103), **characterized in that** the internal limiting surface of the housing (3; 103) comprises a portion (8a; 108a) that widens in the direction of the end portion (7) of the piston (5) that has a larger cross-section.

8. Machine spindle according to claim 7, **characterized in that** the portion (6a) of the gas spring (1) widens conically.

9. Machine spindle according to claim 7, **characterized in that** the portion (108a) of the gas spring (101) widens in steps.

10. Machine spindle according to any one of claims 7-9, **characterized in that** half of the cone angle is within the interval 0,1 ° - 2,0°.

## Patentansprüche

1. In einer Aufspann- bzw. Klemmvorrichtung an einer Maschinenspindel vorgesehene Gasfeder (1; 101), wobei die Klemmvorrichtung eine Zugstange aufweist, Klemmelemente an einem Ende der Zugstange angeordnet sind, um einen Teil einer Werkzeugkupplung an diesem Ende festzuklemmen, wobei die Gasfeder (1; 101) eine in axialer Richtung ausgerichtete Kraft auf die Zugstange in einer Richtung von den Klemmelementen weg ausübt und die Gasfeder (1; 101) ein Gehäuse (3; 103), einen Kolben (5) mit zwei Endabschnitten (7, 15), die in dem Gehäuse (3; 103) in axialer Richtung verschiebbar sind, sowie ein in dem Gehäuse (3; 103) enthaltenes Gasmedium (6) aufweist, **dadurch gekennzeichnet, daß** die innere Begrenzungsfläche des Gehäuses (3; 103) einen Abschnitt (8a; 108a) aufweist, welcher sich in der Richtung des Endabschnittes (7) des Kolbens (5) aufweitet, der einen größeren Querschnitt hat.

2. Gasfeder (1) nach Anspruch 1, **dadurch gekennzeichnet, daß** der Abschnitt (8a) sich konisch aufweitet.

3. Gasfeder (101) nach Anspruch 1, **dadurch gekennzeichnet, daß** der Abschnitt (1 08a) sich stufenweise aufweitet.

4. Gasfeder nach einem oder mehreren der Ansprüche 1 bis 3, **dadurch gekennzeichnet, daß** der halbe Konuswinkel in dem Intervall 0,1 °-2,0° liegt.

5. Gasfeder nach einem oder mehreren der vorangegangenen Ansprüche, **dadurch gekennzeichnet, daß** der Endabschnitt (7) des Kolbens (5) einen größeren Querschnitt hat als Elemente für die Aufnahme von Dichtungen (9, 10).

6. Gasfeder nach einem oder mehreren der vorangegangenen Ansprüche, **dadurch gekennzeichnet, daß** das Ende des Gehäuses (3), welches zu dem Endabschnitt des Kolbens (5) mit kleinerem Querschnitt benachbart ist, Elemente für die Aufnahme von Dichtungen (17, 18) aufweist.

7. Maschinenspindel mit einem Gehäuse, in welchem eine Klemmvorrichtung angeordnet ist, wobei die Klemmvorrichtung eine Gasfeder (1; 101) und eine Zugstange aufweist, Klemmelemente an einem Ende der Zugstange angeordnet sind, um ein Teil an einer Werkzeugkupplung an diesem Ende festzuklemmen, wobei die Gasfeder (1; 101) eine in axialer Richtung ausgerichtete Kraft auf die Zugstange in Richtung von den Klemmelementen weg ausübt und die Gasfeder (1; 101) ein Gehäuse (3; 103), einen in axialer Richtung verschiebbaren Kolben (5) in dem Gehäuse (3; 103), welcher zwei Endabschnitte (7, 15) hat, sowie ein in dem Gehäuse (3; 103) enthaltenes Gasmedium (6) aufweist, **dadurch gekennzeichnet, daß** die innere Begrenzungsfläche des Gehäuses (3; 103) einen Abschnitt (8a; 108a) aufweist, welcher sich in Richtung des Endabschnitts (7) des Kolbens (5) zu einem größeren Querschnitt aufweitet.

8. Maschinenspindel nach Anspruch 7, **dadurch gekennzeichnet, daß** der Abschnitt (8a) der Gasfeder (1) sich konisch aufweitet.

9. Maschinenspindel nach Anspruch 7, **dadurch gekennzeichnet, daß** der Abschnitt (108a) der Gasfeder (101) sich stufenweise aufweitet.

10. Maschinenspindel nach einem der Ansprüche 7 bis 9, **dadurch gekennzeichnet, daß** der halbe Konuswinkel in dem Intervall 0,1°-2,0° liegt.

## Revendications

1. Ressort à gaz (1 ; 101) inclus dans un dispositif de serrage sur une broche de machine, dans lequel ledit dispositif de serrage comprend une tige de traction, des organes de serrage, agencés à une extrémité de la tige de traction, de manière à serrer une partie d'un couplage d'outil à ladite extrémité ; de manière que le ressort à gaz (1 ; 101) exerce une force orientée axialement sur la tige de traction, dans la direction d'écartement vis-à-vis des organes de serrage, et dans lequel le ressort à gaz (1 ; 101) comprend un boîtier (3 ; 103), un piston (5), comprenant deux parties d'extrémité (7, 15), déplaçables axialement dans le boîtier (3 ; 103), ainsi qu'un fluide gazeux (6), contenu dans le boîtier (3 ; 103), **caractérisé en ce que** la surface de limitation interne du boîtier (3 ; 103) comprend une partie (8a ; 108a) allant en s'élargissant en évoluant dans la direction de la partie d'extrémité (7) du piston (5) présentant une plus grande section transversale.

2. Ressort à gaz (1) selon la revendication 1, **caractérisé en ce que** la partie (8a) s'élargit de façon conique.

3. Ressort à gaz (101) selon la revendication 1, **caractérisé en ce que** la partie (108a) s'élargit par degrés.

4. Ressort à gaz selon l'une quelconque ou certaines des revendications 1 à 3, **caractérisé en ce que** la moitié de l'angle de conicité est comprise dans la fourchette allant de 0,1 ° à 2,0°.

5. Ressort à gaz selon l'une quelconque ou certaines des revendications précédentes,
**caractérisé en ce que** la partie d'extrémité (7) du piston (5) ayant une plus grande section transversale comprend des organes pour recevoir des joints d'étanchéité (9, 10).

6. Ressort à gaz selon l'une quelconque ou certaines des revendications précédentes,
**caractérisé en ce que** l'extrémité du boîtier (3) adjacente à la partie d'extrémité du piston (5) ayant une plus petite section transversale comprend des organes pour recevoir des joints d'étanchéité (17, 18).

7. Broche de machine, comprenant un carter, dans lequel un dispositif de serrage est agencé, dans lequel le dispositif de serrage comprend un ressort à gaz (1 ; 101) et une tige de traction, des organes de serrage, agencés à une extrémité de la tige de traction, de manière à serrer une partie d'un couplage d'outil à ladite extrémité de manière que le ressort à gaz (1; 101) exerce une force orientée axialement sur la tige de traction, dans la direction d'écartement vis-à-vis des organes serrage, et dans lequel le ressort à gaz (1 ; 101) comprend un boîtier (3 ; 103), un piston (5), déplaçable axialement dans le boîtier (3 ; 103), ledit piston comprenant deux parties d'extrémité (7, 15), ainsi qu'un fluide gazeux (6), contenu dans le boîtier (3 ; 103), **caractérisé en ce que** la surface de limitation interne du boîtier (3 ; 103) comprend une partie (8a ; 108a) allant en s'élargissant en évoluant dans la direction de la partie d'extrémité (7) du piston (5) présentant une plus grande section transversale.

8. Broche de machine selon la revendication 7, **caractérisée en ce que** la partie (8a) du ressort à gaz (1) s'élargit de façon conique.

9. Broche de machine selon la revendication 7, **caractérisée en ce que** la partie (108a) du ressort à gaz (101) s'élargit par degrés.

10. Broche de machine selon l'une quelconque des revendications 7 à 9, **caractérisée en ce que** la moitié de l'angle de conicité est comprise dans la fourchette allant de 0,1 ° à 2,0°.
